# FASCICULE DE BREVET EUROPEEN

(11) **EP 1 538 050 B1**
(45) Date de publication et mention de la délivrance du brevet: **13.09.2006**
(21) Numéro de dépôt: 04028313.7
(22) Date de dépôt: 30.11.2004
(51) Int. Cl.: B60T 13/575

(54) **Servofrein comportant un piston de décompression en matériau plastique intégré à la tige de poussée**
Bremskraftverstärker mit einem in der Stösselstange integrierten Dekompressionskolben aus einem elastischen Material
Brake booster having a decompression piston from a plastics material integrated in the push rod

(30) Priorité: 01.12.2003 FR 0314046
(43) Date de publication de la demande: 08.06.2005
(73) Titulaire: ROBERT BOSCH GMBH, 70442 Stuttgart (DE)
(72) Inventeur: Simon Bacardit, Juan, 08013 Barcelone (ES); Sacristan, Fernando, 08348 Barcelone (ES); Berthomieu, Bruno, 08013 Barcelone (ES)
(74) Mandataire: Hurwic, Aleksander Wiktor

(56) Documents cités:
- EP-A- 1 293 407
- WO-A-97/21572
- DE-A- 19 917 281
- FR-A- 2 630 694
- FR-A- 2 820 388
- US-A- 5 884 548

## Description

L'invention concerne un servofrein pour un véhicule automobile.

Le document FR-A- 2 820 988 divulgue un servofrein selon le préambule de la revendication 1.

L'invention concerne plus particulièrement un servofrein pour un véhicule automobile, du type qui comporte un servomoteur pneumatique d'assistance au freinage actionnant un maître-cylindre, du type dans lequel le servomoteur comporte une enveloppe rigide à l'intérieur de laquelle est mobile une cloison transversale délimitant de façon étanche une chambre avant, soumise à une première pression, et une chambre arrière soumise à une deuxième pression, du type dans lequel le servomoteur comporte un piston mobile, solidaire de la cloison mobile, qui comporte une face avant qui est susceptible de solliciter un piston primaire du maître-cylindre par l'intermédiaire d'un disque de réaction qui est interposé entre le piston mobile et une tige de poussée qui est solidaire d'une extrémité arrière du piston primaire, du type dans lequel le servomoteur comporte une tige de commande qui se déplace dans le piston sélectivement en fonction d'un effort axial d'entrée exercé vers l'avant à l'encontre d'un effort de rappel exercé sur la tige par un ressort de rappel, du type dans lequel l'extrémité avant de la tige de commande comporte au moins un plongeur, monté coulissant dans le piston, qui est lié à au moins un siège annulaire d'un clapet qui est susceptible d'établir dans la chambre arrière une deuxième pression supérieure à la première pression régnant dans la chambre avant pour provoquer le déplacement de la cloison mobile, du type dans lequel le servomoteur comporte un palpeur, agencé à l'extrémité avant du plongeur et traversant un alésage débouchant du piston qui, dans une position de repos de la tige de commande, est agencé à une distance de saut déterminée du disque de réaction et qui est susceptible, lorsque la tige de commande est actionnée suivant un effort d'entrée d'intensité supérieure à une première intensité déterminée, de venir au contact du disque de réaction de manière à transmettre au plongeur et à la tige de commande l'effort de réaction du maître-cylindre, le rapport de la surface du disque de réaction en contact avec la cage et de la surface du palpeur déterminant un premier rapport d'assistance déterminé, et du type dans lequel la tige de poussée comporte au moins une face arrière qui est agencée au contact du disque de réaction et dans laquelle une paroi mobile de décompression est susceptible, lorsque la tige de commande est actionnée suivant un effort d'entrée d'intensité supérieure à une seconde intensité déterminée supérieure à la première, de se déplacer pour créer un volume supplémentaire dans lequel une partie avant du disque de réaction est susceptible de s'expandre pour réduire l'effort de réaction transmis au palpeur par l'intermédiaire de la face arrière du disque de réaction, le rapport de la surface du disque de réaction en contact avec la face arrière de la tige de poussée et de la surface du palpeur déterminant un second rapport d'assistance supérieur au premier.

On connaît de nombreux exemples de servofreins de ce type.

Dans un tel servofrein la paroi mobile de décompression fait généralement partie d'un dispositif qui est logé dans la tige de poussée à l'extérieure du piston primaire du maître-cylindre.

En effet, ce dispositif est conventionnellement constitué d'un boîtier dont une face est accolée au disque de réaction et est percée pour permettre le passage d'un piston cylindrique de décompression qui est agencé lui aussi au contact du disque de réaction sensiblement dans l'axe du palpeur. Le piston de décompression est rappelé élastiquement vers le disque de réaction par un ressort hélicoïdal qui est logé à l'intérieur du boîtier et qui est sensiblement du même diamètre que le piston de décompression. Lorsque l'intensité de l'effort d'entrée dépasse la seconde valeur déterminée, le piston de décompression est repoussé dans le boîtier en comprimant le ressort hélicoïdal et il crée ainsi un volume libre qui permet la décompression du disque de réaction.

Cette conception présente de nombreux inconvénients en termes d'encombrement.

En effet, pour bénéficier d'un piston de décompression comportant une surface propre à créer dans la cage un volume de décompression adéquat permettant de provoquer une décompression adéquate du disque de réaction, celui est nécessairement d'un diamètre élevé. Il en est de même pour le ressort hélicoïdal chargé d'assurer le rappel élastique du piston de décompression.

Dès lors, le dispositif ne peut être logé que dans une partie de la tige de poussée qui est agencée à l'extérieur du piston primaire du maître cylindre, ce qui rend le servofrein d'autant plus encombrant axialement.

Pour remédier à cet inconvénient et permettre la réception d'une partir du dispositif dans le pison primaire du maître cylindre, l'invention propose un servofrein comportant un piston de décompression de grande surface, apte à créer un volume de décompression adéquat pour le disque de réaction, et permettant néanmoins l'emploi d'un ressort hélicoïdal de taille réduite.

Dans ce but, l'invention propose un servofrein du type décrit précédemment, caractérisé en ce que la tige de poussée comporte :
- un tronçon arrière cylindrique, d'un premier diamètre déterminé et de longueur réduite, qui comporte la face arrière dans laquelle est agencée une lumière qui reçoit en coulissement un piston de décompression conforme d'un deuxième diamètre inférieur au premier diamètre et d'une longueur inférieure à la longueur de la lumière, dont une face arrière forme la paroi mobile de décompression,
- un tronçon avant cylindrique, d'un troisième diamètre inférieur au deuxième diamètre et de longueur adaptée, sur lequel est reçu un ressort hélicoïdal qui prend appui entre une face d'épaulement avant dudit tronçon avant et au moins un bras du piston de décompression qui traverse un perçage du tronçon arrière, pour permettre le rappel du piston de décompression,
de manière à proposer une tige de poussée qui comporte un tronçon avant de diamètre minimal apte à être logé dans l'extrémité arrière du piston primaire du maître cylindre et qui comporte un piston de décompression de diamètre élevé.

Selon d'autres caractéristiques de l'invention :
- le tronçon arrière de la tige de poussée comporte un disque de butée qui est fixé à l'extrémité arrière du tronçon avant et autour duquel est serti une cage tubulaire, traversée par un alésage du deuxième diamètre formant la lumière dont l'extrémité arrière reçoit le piston de décompression et délimite un bord annulaire arrière et dont l'extrémité avant débouche en regard d'au moins un perçage, excentré selon un quatrième diamètre supérieur au troisième diamètre, par lequel au moins un bras excentré du piston de décompression, qui s'étend parallèlement à la direction axiale à partir de sa face avant, est agencé au contact du ressort de rappel,
- l'extrémité arrière du tronçon avant reçoit en coulissement une rondelle qui est interposée entre le ressort de rappel et chaque bras du piston de décompression,
- le piston de décompression comporte au moins trois bras excentrés qui traversent le disque de butée et qui sont répartis angulairement de manière régulière autour de l'axe de la tige de poussée,
- les perçages du disque de butée s'étendent au delà du deuxième diamètre de l'alésage et l'extrémité extérieure de chaque bras est d'un diamètre inférieur au perçage du disque qu'il traverse et comporte un ergot qui est destiné à former une butée axiale coopérant avec une face avant de la cage, pour éviter que le piston de décompression ne s'échappe de l'alésage de la cage,
- la face d'épaulement du tronçon avant de la tige de poussée est portée par un écrou qui est reçu sur un filetage porté par l'extrémité avant du tronçon avant.
- le filetage est d'une longueur correspondant sensiblement au quart de la longueur du tronçon avant de la tige de poussée, pour proposer une pluralité de réglages de la précharge du ressort de rappel,
- l'extrémité avant du tronçon avant 64 comporte un perçage dans lequel est reçu un pion arrière d'un doigt axial 94 d'extrémité de la tige de poussée qui est destiné à permettre l'appui de ladite tige de poussée contre une face de fond d'un alésage arrière du piston primaire du maître-cylindre,
- au moins la rondelle, la cage tubulaire et le piston de décompression sont réalisés en un matériau plastique.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe axiale d'un servofrein selon l'invention ;

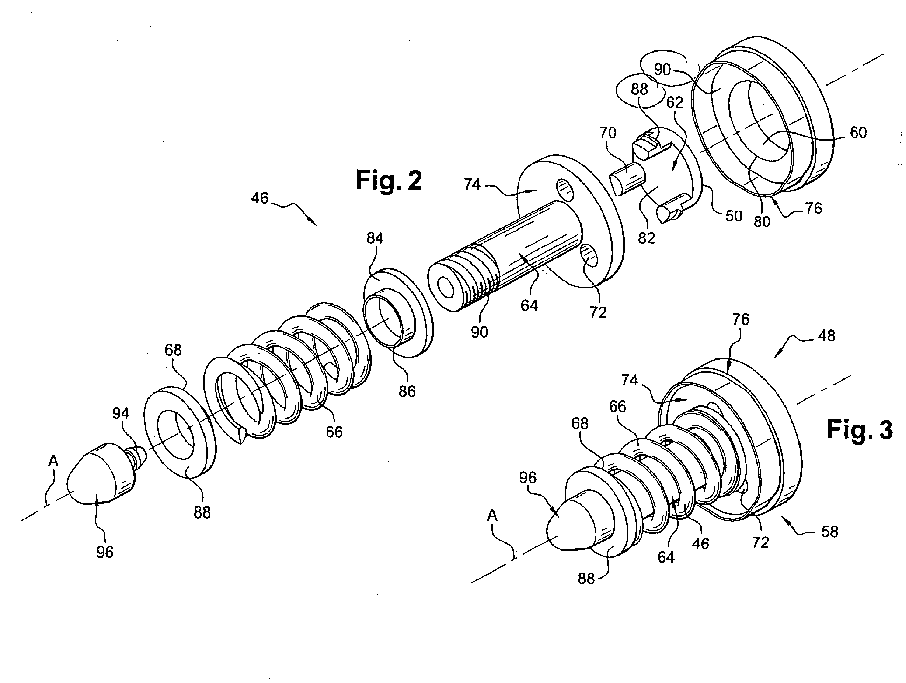

- la figure 2 est une vue en perspective éclatée d'une tige de poussée selon l'invention,
- la figure 3 est une vue en perspective assemblée d'une tige de poussée selon l'invention,
- la figure 4 est une vue en coupe de détail d'un servofrein selon l'invention dans laquelle le palpeur ne sollicite pas le disque de réaction et dans laquelle le piston de décompression est au repos,
- la figure 5 est une vue en coupe de détail d'un servofrein selon l'invention dans laquelle le palpeur sollicite le disque réaction et dans laquelle le piston de décompression est au repos,
- la figure 6 est une vue en coupe de détail d'un servofrein selon l'invention dans laquelle le palpeur sollicite le disque réaction et dans laquelle le piston de décompression est sollicité pour décomprimer le disque de réaction.

Dans la description qui va suivre, des chiffres de référence identiques désignent des pièces identiques ou ayant des fonctions similaires.

Par convention, les termes "avant", "arrière", supérieur", "inférieur" désignent respectivement des éléments ou des positions orientés respectivement vers la gauche, la droite, le haut, ou le bas des figures.

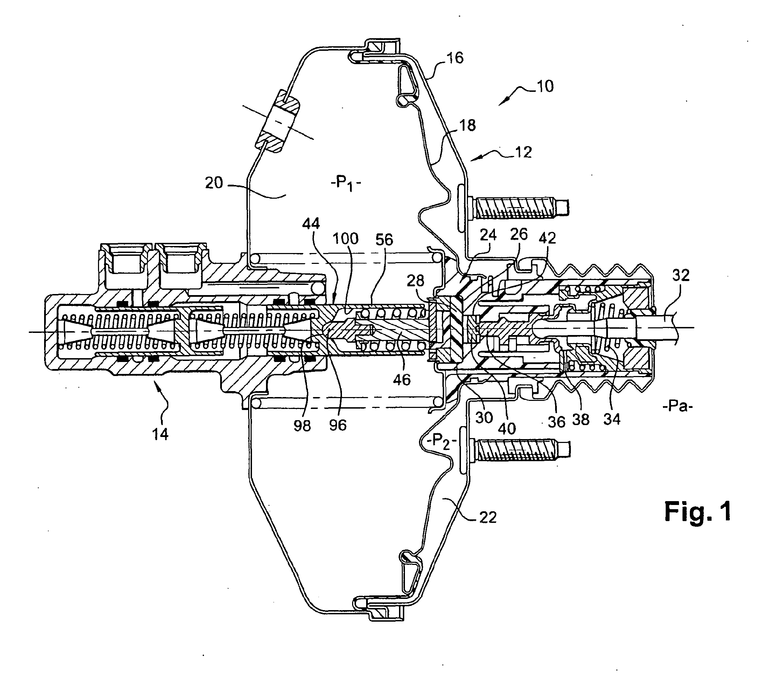

On a représenté à la figure 1 l'ensemble d'un servofrein 10 pour un véhicule automobile.

De manière connue, le servofrein 10 comporte un servomoteur 12 pneumatique d'assistance au freinage qui est destiné à actionner un maître-cylindre 14.

Le servomoteur 12 comporte une enveloppe 16 rigide à l'intérieur de laquelle est mobile une cloison 18 transversale délimitant de façon étanche une chambre avant 20, soumise à une première pression "P₁", et une chambre arrière 22 soumise à une deuxième pression P₂" variant entre la première pression "P₁" et une pression "Pₐ" supérieure à la première pression "P₁".

De manière connue, le servomoteur 12 comporte un piston mobile 24, solidaire de la cloison mobile 18, qui comporte une face avant 26 qui est susceptible de solliciter un piston primaire 44 du maître-cylindre 14 par l'intermédiaire d'un disque 28 de réaction et d'une tige 46 de poussée qui est liée à l'extrémité arrière du piston primaire 44. Le disque 28 de réaction est logé dans un alésage 30 de la face avant 26 du piston mobile 24.

Le servomoteur 12 comporte aussi une tige 32 de commande qui se déplace dans le piston 24 sélectivement en fonction d'un effort axial d'entrée exercé vers l'avant à l'encontre d'un effort de rappel exercé sur la tige 32 par un ressort 34 de rappel.

L'extrémité avant de la tige 32 de commande comporte un plongeur 36, monté coulissant dans le piston 24, qui est lié à au moins un siège annulaire d'un clapet 38 qui est susceptible d'établir dans la chambre arrière 22 une deuxième pression "P₂" supérieure à la première pression "P₁" régnant dans la chambre avant 20 pour provoquer le déplacement de la cloison mobile 18,

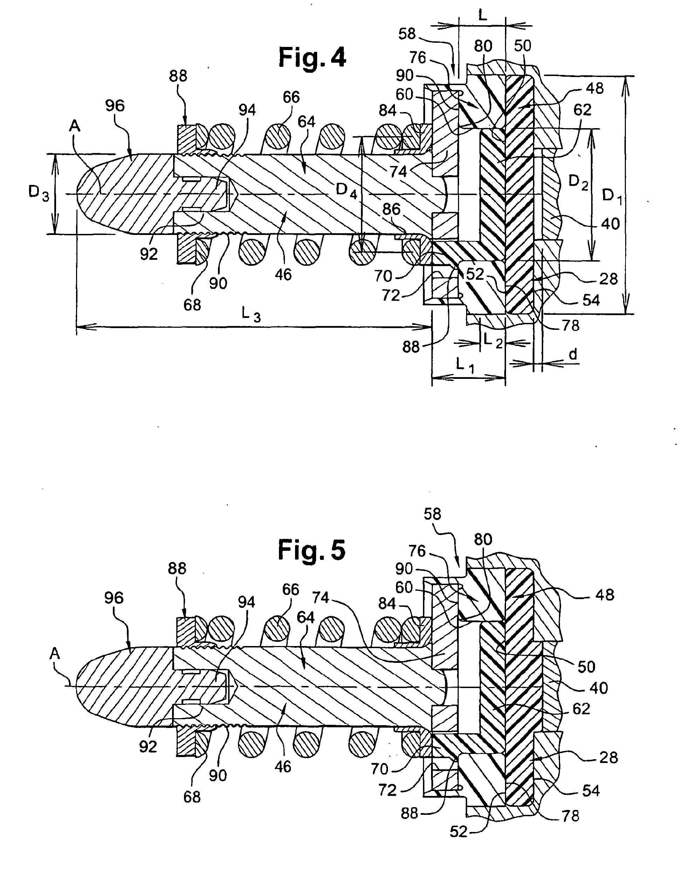

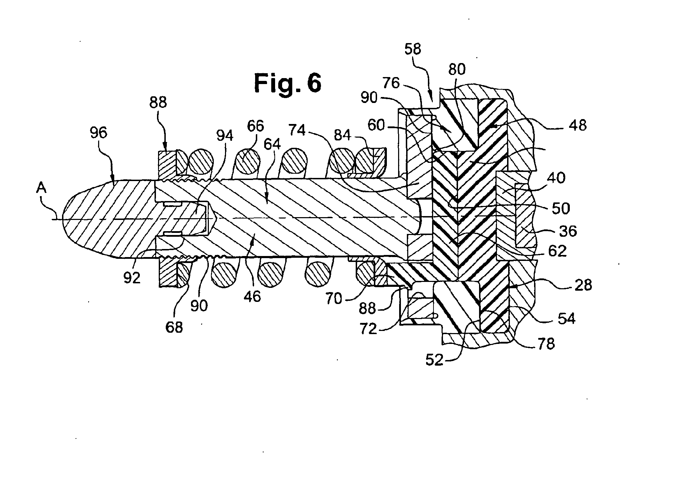

Le servomoteur 12 comporte un palpeur 40, agencé à l'extrémité avant du plongeur 36 et traversant un alésage 42 débouchant dans l'alésage 30 qui, dans une position de repos de la tige 32 de commande, est, comme représenté à la figure 4, agencé à une distance "d" de saut déterminée du disque 28 de réaction et qui est susceptible, lorsque la tige 32 de commande est actionnée suivant un effort d'entrée d'intensité supérieure à une première intensité déterminée, de venir au contact du disque 28 de réaction, comme représenté aux figures 5 et 6, de manière à transmettre au plongeur 36 et à la tige 32 de commande l'effort de réaction du maître-cylindre 14.

De manière connue, le rapport de la surface du disque 28 de réaction en contact avec une face arrière 48 de la tige 46 de poussée et de la surface du palpeur 40 déterminent un rapport d'assistance déterminé.

Avantageusement, la face arrière 48 de la tige 46 de poussée comporte une paroi mobile 50 de décompression est susceptible, lorsque la tige 32 de commande est actionnée suivant un effort d'entrée d'intensité supérieure à une seconde intensité déterminée supérieure à la première, de se déplacer pour créer un volume supplémentaire dans lequel une partie avant 52 du disque 28 de réaction est susceptible de s'expandre pour réduire l'effort de réaction transmis au palpeur 40 par l'intermédiaire de la face arrière 54 du disque 28 de réaction, le rapport de la surface du disque 28 de réaction en contact avec la face arrière 48 de la tige de poussée et de la surface du palpeur 40 modifiant le rapport d'assistance.

Ainsi, de manière connue, le rapport d'assistance peut varier entre un premier rapport d'assistance déterminé, obtenu dans la configuration de la figure 5 dans laquelle la paroi 50 de décompression n'est pas sollicitée, et un second rapport d'assistance déterminé, supérieur au premier, qui est obtenu dans la configuration de la figure 6 lorsque la paroi 50 de décompression est sollicitée.

Conformément à l'invention, pour proposer une tige 46 de poussée comportant un tronçon avant de diamètre minimal apte à être logé dans l'extrémité arrière 56 du piston primaire 44 du maître cylindre et comportant toutefois un piston de décompression de diamètre élevé, la tige 46 de poussée comporte un tronçon arrière 58 cylindrique, d'un premier diamètre "D₁" déterminé et de longueur "L₁" réduite, qui comporte la face arrière 48 dans laquelle est agencée une lumière 60 de longueur "L" déterminée qui reçoit en coulissement un piston 62 de décompression conforme d'un deuxième diamètre "D₂" inférieur au premier diamètre "D₁" et d'une longueur "L₂" inférieure à la longueur "L" de la lumière, dont une face arrière forme la paroi mobile 50 de décompression.

Par ailleurs, comme l'illustre la figure 4, la tige 46 de poussée comporte aussi un tronçon avant 64 cylindrique, d'un troisième diamètre "D₃" inférieur au deuxième diamètre "D₂" et de longueur "L₃" adaptée, sur lequel est reçu un ressort 66 hélicoïdal qui prend appui entre une face d'épaulement avant 68 dudit tronçon avant et au moins un bras 70 du piston 62 de décompression qui traverse un perçage 72 du tronçon arrière 58, pour permettre le rappel du piston 62 de décompression.

De cette manière, l'invention propose une tige 46 de poussée qui comporte un tronçon avant 64 de diamètre "D₃" minimal apte à être logé dans l'extrémité arrière 56 du piston 44 primaire du maître cylindre 14 et qui comporte un piston 62 de décompression de diamètre "D₂" élevé.

Plus particulièrement, le tronçon arrière 58 de la tige 46 de poussée comporte un disque 74 de butée qui est fixé à l'extrémité arrière du tronçon avant 64 et autour duquel est serti une cage 76 tubulaire, traversée par un alésage du deuxième diamètre "D₂" formant la lumière 60 dont l'extrémité arrière reçoit le piston 62 de décompression et délimite un bord annulaire arrière 78 formant une face d'appui fixe pour le disque 28 de réaction et dont l'extrémité avant 80 débouche en regard d'au moins un perçage 72, excentré selon un quatrième diamètre "D₄" supérieur au troisième diamètre "D₃", par lequel au moins un bras 70 excentré du piston 62 de décompression, qui s'étend parallèlement à la direction axiale à partir de sa face avant 82, est agencé au contact du ressort 66 de rappel.

Afin d'assurer un contact parfait entre chaque bras 70 et le ressort 66 de rappel, l'extrémité arrière du tronçon avant 64 reçoit en coulissement une rondelle 84 qui est interposée entre le ressort 66 de rappel et chaque bras 70 du piston de décompression. La rondelle 84 comporte par exemple une portée avant 86 cylindrique de guidage de même diamètre interne "D₃" que le tronçon avant 64 et d'un diamètre externe correspondant au diamètre interne du ressort 66.

Dans le mode de réalisation préféré de l'invention, le piston de décompression comporte au moins trois bras 70 excentrés qui traversent le disque 74 de butée et qui sont répartis angulairement de manière régulière autour de l'axe "A" de la tige 46 de poussée. Cette configuration permet d'assurer une répartition uniforme de l'effort de compression transmis par le piston 62 au ressort 66 de rappel.

Avantageusement, les perçages 72 du disque 74 de butée s'étendent au delà du deuxième diamètre "D₂" de l'alésage 60. De plus, l'extrémité extérieure de chaque bras 70 est d'un diamètre inférieur au perçage 72 du disque 74 qu'il traverse et comporte un ergot 88 qui est destiné à former une butée axiale coopérant avec une face avant 90 de la cage 76. Cette configuration permet d'éviter que le piston 62 de décompression ne s'échappe de l'alésage 60 de la cage 76 lorsque le piston 62 est rappelé élastiquement par le ressort 66.

Par ailleurs, dans le mode de réalisation préféré de l'invention, la face d'épaulement 68 du tronçon avant 64 de la tige 46 de poussée est portée par un écrou 88 qui est reçu sur un filetage 90 porté par l'extrémité avant du tronçon avant 64.

De plus, le filetage 90 est d'une longueur correspondant sensiblement au quart de la longueur "L₃" du tronçon avant 64 de la tige 46 de poussée, ce qui permet de proposer une pluralité de réglages de la précharge du ressort 66 de rappel.

Il sera compris que, en variante, l'écrou 88 pourrait être remplacé par une bague montée serrée selon une position axiale déterminée sur l'extrémité avant du tronçon avant 64 sans changer la nature de l'invention.

Enfin, l'extrémité avant du tronçon avant 64 comporte un perçage 92 dans lequel est reçu un pion arrière 94 d'un doigt axial 96 d'extrémité de la tige 46 de poussée qui est destiné à permettre l'appui de ladite tige 46 de poussée contre une face 98 de fond d'un alésage arrière 100 du piston primaire 44 du maître-cylindre 14.

De cette manière, la tige 46 de poussée est agencée selon un encombrement réduit dans le piston primaire 44 du maître-cylindre 14.

Avantageusement, au moins la rondelle 84, la cage tubulaire 76 et le piston 62 de décompression sont réalisés en un matériau plastique. Cette conception permet de réaliser de manière simple et économique les formes de ces éléments.

Dans cette configuration, le fonctionnement de la tige 46 de poussée a été représenté aux figures 4 à 6. Dans une position initiale représentée à la figure 4, un effort d'entrée nul, ou d'intensité inférieure à une première intensité déterminée, est appliqué sur la tige 32 de commande. Dans cette configuration, le palpeur 40 ne sollicite pas le disque 28 de réaction et il est agencé à une distance "d" de saut de celui-ci.

Dans une position intermédiaire représentée à la figure 5, un effort d'entrée est appliqué sur la tige 32 de commande suivant un effort d'entrée d'intensité supérieur à la première intensité déterminée et inférieur à une seconde intensité déterminée. Dans cette configuration, le disque 28 de réaction se déforme et comble sensiblement la distance "d" de saut le séparant du palpeur 40 pour transmettre l'effort d'entrée au piston primaire 44 suivant le premier rapport d'assistance déterminé. Dans cette configuration, l'effort d'entrée étant inférieur au tarage du ressort de rappel 66, le piston 62 de décompression n'est pas sollicité et demeure dans l'alignement du bord annulaire 78 de la face arrière 48 du tronçon 58. Le disque 28 de réaction transmet au palpeur 40 l'intégralité de la réaction du maître-cylindre 14.

Dans la position de décompression, représentée à la figure 6, un effort d'entrée est appliqué sur la tige 32 de commande suivant un effort d'entrée d'intensité supérieur à la seconde intensité déterminée. Dans cette configuration, le palpeur 40 sollicite le disque 28 de réaction qui surmonte l'effort antagoniste du ressort 66 et le piston 62 de décompression s'enfonce dans le tronçon arrière 58 en coulissant dans l'alésage 60, ce qui a pour effet de décomprimer localement le disque 28 de réaction au contact du palpeur 40. L'effort d'entrée est transmis au piston primaire 44 suivant le second rapport d'assistance déterminé qui est supérieur au premier. Le disque 28 de réaction ne transmet plus au palpeur 40 qu'une partie de la réaction du maître-cylindre 14.

L'invention permet donc d'intégrer un piston 62 de décompression à une tige 46 de poussée de manière simple et efficace.

## Revendications

1. Servofrein (10) pour un véhicule automobile, du type qui comporte un servomoteur (12) pneumatique d'assistance au freinage actionnant un maître-cylindre (14),
du type dans lequel le servomoteur (12) comporte une enveloppe (16) rigide à l'intérieur de laquelle est mobile une cloison (18) transversale délimitant de façon étanche une chambre avant (20), soumise à une première pression (P₁), et une chambre arrière (22) soumise à une deuxième pression (P₂),
du type dans lequel le servomoteur (12) comporte un piston mobile (24), solidaire de la cloison mobile (18), qui comporte une face avant (26) qui est susceptible de solliciter un piston primaire (44) du maître-cylindre (14) par l'intermédiaire d'un disque (28) de réaction qui est interposé entre le piston mobile (24) et une tige (46) de poussée qui est solidaire d'une extrémité arrière du piston primaire (44),
du type dans lequel le servomoteur (12) comporte une tige (32) de commande qui se déplace dans le piston (24) sélectivement en fonction d'un effort axial d'entrée exercé vers l'avant à l'encontre d'un effort de rappel exercé sur la tige (32) par un ressort (34) de rappel,
du type dans lequel l'extrémité avant de la tige (32) de commande comporte au moins un plongeur (36), monté coulissant dans le piston (24), qui est lié à au moins un siège annulaire d'un clapet (38) qui est susceptible d'établir dans la chambre arrière (22) une deuxième pression (P₂) supérieure à la première pression (P₁) régnant dans la chambre avant (20) pour provoquer le déplacement de la cloison mobile (18),
du type dans lequel le servomoteur (12) comporte un palpeur (40), agencé à l'extrémité avant du plongeur (36) et traversant un alésage (44) débouchant du piston (24) qui, dans une position de repos de la tige (32) de commande, est agencé à une distance (d) de saut déterminée du disque (28) de réaction et qui est susceptible, lorsque la tige (32) de commande est actionnée suivant un effort d'entrée d'intensité supérieure à une première intensité déterminée, de venir au contact du disque (28) de réaction de manière à transmettre au plongeur (36) et à la tige (32) de commande l'effort de réaction du maître-cylindre (14), le rapport de la surface du disque (28) de réaction en contact avec une face arrière (48) de la tige (46) de poussée et de la surface du palpeur (40) déterminant un premier rapport d'assistance déterminé,
et du type dans lequel la face arrière (48) de la tige (46) de poussée comporte une paroi (50) mobile de décompression est susceptible, lorsque la tige (32) de commande est actionnée suivant un effort d'entrée d'intensité supérieure à une seconde intensité déterminée supérieure à la première, de se déplacer pour créer un volume supplémentaire dans lequel une partie avant (52) du disque (28) de réaction est susceptible de s'expandre pour réduire l'effort de réaction transmis au palpeur (40) par l'intermédiaire de la face arrière (54) du disque (28) de réaction, le rapport de la surface du disque (28) de réaction en contact avec la face arrière (48) de la tige de poussée et de la surface du palpeur (40) déterminant un second rapport d'assistance supérieur au premier,
**caractérisé en ce que** la tige (46) de poussée comporte :
- un tronçon arrière (58) cylindrique, d'un premier diamètre (D₁) déterminé et de longueur (L₁) réduite, qui comporte la face arrière (48) dans laquelle est agencée une lumière (60) qui reçoit en coulissement un piston (62) de décompression conforme d'un deuxième diamètre (D₂) inférieur au premier diamètre et d'une longueur (L₂) inférieure à la longueur (L) de la lumière (60), dont une face arrière forme la paroi mobile (50) de décompression,
- un tronçon avant (64) cylindrique, d'un troisième diamètre (D₃) inférieur au deuxième diamètre (D₂) et de longueur (L₃) adaptée, sur lequel est reçu un ressort (66) hélicoïdal qui prend appui entre une face d'épaulement avant (68) dudit tronçon avant (64) et au moins un bras (70) du piston (62) de décompression qui traverse un perçage (72) du tronçon arrière (58), pour permettre le rappel du piston (62) de décompression,
de manière à proposer une tige (46) de poussée qui comporte un tronçon avant (64) de diamètre (D₃) minimal apte à être logé dans l'extrémité arrière (56) du piston primaire (44) du maître cylindre (14) et qui comporte un piston (62) de décompression de diamètre (D₂) élevé.

2. Servofrein (10) selon la revendication précédente, **caractérisé en ce que** le tronçon arrière (58) de la tige (46) de poussée comporte un disque (74) de butée qui est fixé à l'extrémité arrière du tronçon avant (64) et autour duquel est serti une cage (76) tubulaire, traversée par un alésage (60) du deuxième diamètre (D₂) formant la lumière dont l'extrémité arrière reçoit le piston (62) de décompression et délimite un bord (78) annulaire arrière et dont l'extrémité avant (80) débouche en regard d'au moins un perçage (72), excentré selon un quatrième diamètre (D₄) supérieur au troisième diamètre (D₃), par lequel au moins un bras excentré (70) du piston (62) de décompression, qui s'étend parallèlement à la direction axiale à partir de sa face avant (82), est agencé au contact du ressort (66) de rappel.

3. Servofrein (10) selon la revendication précédente, **caractérisé en ce que** l'extrémité arrière du tronçon avant (64) reçoit en coulissement une rondelle (84) qui est interposée entre le ressort (66) de rappel et chaque bras (70) du piston (62) de décompression.

4. Servofrein (10) selon l'une des revendications 2 ou 3, **caractérisé en ce que** le piston (62) de décompression comporte au moins trois bras (70) excentrés qui traversent le disque (74) de butée et qui sont répartis angulairement de manière régulière autour de l'axe (A) de la tige (46) de poussée.

5. Servofrein (10) selon l'une des revendications 2 à 4, **caractérisé en ce que** les perçages (72) du disque (74) de butée s'étendent au delà du deuxième diamètre (D₂) de l'alésage (60) et **en ce que** l'extrémité extérieure de chaque bras (70) est d'un diamètre inférieur au perçage (72) du disque (74) qu'il traverse et comporte un ergot (88) qui est destiné à former une butée axiale coopérant avec une face avant (90) de la cage (76), pour éviter que le piston (62) de décompression ne s'échappe de l'alésage (60) de la cage (76).

6. Servofrein (10) selon l'une quelconque des revendications 1 à 5, **caractérisé en ce que** la face d'épaulement (68) du tronçon avant (64) de la tige (46) de poussée est portée par un écrou (88) qui est reçu sur un filetage (90) porté par l'extrémité avant du tronçon avant (64).

7. Servofrein (10) selon la revendication précédente, **caractérisé en ce que** le filetage (90) est d'une longueur correspondant sensiblement au quart de la longueur (L₃) du tronçon (64) avant de la tige de poussée, pour proposer une pluralité de réglages de la précharge du ressort (66) de rappel.

8. Servofrein (10) selon l'une quelconque des revendications 1 à 7, **caractérisé en ce que** l'extrémité avant du tronçon avant (64) comporte un perçage (92) dans lequel est reçu un pion arrière (94) d'un doigt axial (96) de la tige (46) de poussée destiné à permettre l'appui de ladite tige (46) de poussée contre une face (98) de fond d'un alésage arrière (100) du piston primaire (44) du maître-cylindre (14).

9. Servofrein (10) selon l'une quelconque des revendications 2 à 8, **caractérisé en ce que** au moins la rondelle (84), la cage tubulaire (76) et le piston (62) de décompression sont réalisés en un matériau plastique.

## Claims

1. Brake servo (10) for a motor vehicle, of the type that comprises a pneumatic brake booster (12) operating a master cylinder (14),
of the type in which the booster (12) comprises a rigid envelope (16) in which a moveable transverse partition (18) defines leaktightly a front chamber (20), subjected to a first pressure (P₁), and a rear chamber (22) subjected to a second pressure (P₂), of the type in which the booster (12) comprises, connected to the moveable partition (18), a moveable piston (24) that comprises a front face (26) able to act on a primary piston (44) of the master cylinder (14) via a reaction disk (28) interposed between the moveable piston (24) and a push rod (46) that is connected to a rear end of the primary piston (44),
of the type in which the booster (12) comprises a control rod (32) moving inside the piston (24) selectively as a function of an axial entering force acting forward against a restoring force applied to the rod (32) by a return spring (34),
of the type in which the front end of the control rod (32) comprises, sliding in the piston (24), at least one plunger (36) that is connected to at least one annular seat of a valve (38) able to establish in the rear chamber (22) a second pressure (P₂) higher than the first pressure (P₁) existing in the front chamber (20) so as to move the moveable partition (18),
of the type in which the booster (12) comprises at the front end of the plunger (36) a feeler (40) passing through an open-ended bore (42) in the piston (24) which, when the control rod (32) is in a rest position, is at a defined jump distance (d) from the reaction disk (28) and which is able, when the control rod (32) is operated following an entering force of value greater than a defined first value, to come into contact with the reaction disk (28) in such a way as to transmit to the plunger (36) and to the control rod (32) the reaction force of the master cylinder (14), the ratio of the surface area of the reaction disk (28) in contact with a rear face (48) of the push rod (46) to the surface area of the feeler (40) giving a first defined assistance ratio,
and of the type in which the rear face (48) of the push rod (46) comprises a moveable decompression wall (50) able, when the control rod (32) is operated following an entering force of value greater than a second defined value greater than the first, to move so as to create an additional volume in which a front part (52) of the reaction disk (28) is able to expand to reduce the reaction force transmitted to the feeler (40) through the rear face (54) of the reaction disk (28), the ratio of the surface area of the reaction disk (28) in contact with the rear face (48) of the push rod to the surface area of the feeler (40) giving a second assistance ratio greater than the first,
**characterized in that** the push rod (46) comprises:
- a cylindrical rear segment (58) of a first defined diameter (D₁) and of short length (L₁), which includes the rear face (48) containing a hole (60) in which slides a matching decompression piston (62) of a second diameter (D₂) less than the first diameter and of a length (L₂) less than the length (L) of the hole (60), of which a rear face forms the moveable decompression wall (50),
- a cylindrical front segment (64), of a third diameter (D₃) less than the second diameter (D₂) and of suitable length (L₃), that takes a helical spring (66) which acts between a front shoulder face (68) of said front segment (64) and at least one arm (70) of the decompression piston (62) which passes through a drilling (72) in the rear segment (58), to allow the return of the decompression piston (62),
in such a way as to provide a push rod (46) that has a front segment (64) of minimal diameter (D₃) able to be housed in the rear end (56) of the primary piston (44) of the master cylinder (14) and that has a decompression piston (62) of large diameter (D₂).

2. Brake servo (10) according to the preceding claim, **characterized in that** the rear segment (58) of the push rod (46) has a stop disk (74) that is fixed to the rear end of the front segment (64) and around which is crimped a tubular cage (76) through which runs a bore (60) of the second diameter (D₂) forming the hole whose rear end takes the decompression piston (62) and defines a rear annular edge (78) and whose open front end terminates at at least one eccentric drilling (72) having a fourth diameter (D₄) greater than the third diameter (D₃), by which at least one eccentric arm (70) of the decompression piston (62), which extends parallel to the axial direction from its front face (82) is arranged in contact with the return spring (66).

3. Brake servo (10) according to the preceding claim, **characterized in that** the rear end of the front segment (64) takes a sliding washer (84) which is interposed between the return spring (66) and each arm (70) of the decompression piston (62).

4. Brake servo (10) according to either of Claims 2 and 3, **characterized in that** the decompression piston (62) comprises at least three eccentric arms (70) that extend through the stop disk (74) and that are distributed at regular angular intervals about the axis (A) of the push rod (46).

5. Brake servo (10) according to one of Claims 2 to 4, **characterized in that** the drillings (72) in the stop disk (74) extend beyond the second diameter (D₂) of the bore (60) and **in that** the outer end of each arm (70) is of a smaller diameter than the drilling (72) in the disk (74) through which it passes and has a nub (88) to form an axial stop acting on a front face (90) of the cage (76), to prevent the decompression piston (62) escaping from the bore (60) in the cage (76).

6. Brake servo (10) according to any one of Claims 1 to 5, **characterized in that** the shoulder face (68) of the front segment (64) of the push rod (46) is carried by a nut (88) mounted on a thread (90) formed on the front end of the front segment (64).

7. Brake servo (10) according to the preceding claim, **characterized in that** the thread (90) is of a length approximately equal to one fourth of the length (L₃) of the front segment (64) of the push rod, in order to provide a plurality of adjustments of the return spring (66) preload.

8. Brake servo (10) according to any one of Claims 1 to 7, **characterized in that** the front end of the front segment (64) contains a drilling (92) that takes a rear pin (94) on an axial stud (96) of the push rod (46), said pin being designed to allow said push rod (46) to bear against an end face (98) of a rear bore (100) in the primary piston (44) of the master cylinder (14).

9. Brake servo (10) according to any one of Claims 2 to 8, **characterized in that** at least the washer (84), the tubular cage (76), and the decompression piston (62) are made of a plastic material.

## Patentansprüche

1. Servobremse (10) für ein Kraftfahrzeug, vom Typ, der einen pneumatischen Servomotor (12) zur Bremsunterstützung aufweist, welcher einen Hauptzylinder (14) betätigt,
vom Typ, bei dem der Servomotor (12) ein starres Gehäuse (16) aufweist, in dem eine quer verlaufende Wand (18) beweglich ist, die in dichter Weise eine vordere Kammer (20), die einem ersten Druck (P₁) ausgesetzt ist, und eine hintere Kammer (22) begrenzt, die einem zweiten Druck (P₂) ausgesetzt ist,
vom Typ, bei dem der Servomotor (12) einen beweglichen, fest mit der beweglichen Wand (18) verbundenen Kolben (24) aufweist, der eine vordere Fläche (26) aufweist, die einen Primärkolben (44) des Hauptzylinders (14) mittels einer Reaktionsscheibe (28) beaufschlagen kann, welche zwischen dem beweglichen Kolben (24) und einer Schubstange (46) angeordnet ist, welche mit einem hinteren Ende des Primärkolbens (44) fest verbunden ist,
vom Typ, bei dem der Servomotor (12) eine Steuerstange (32) aufweist, die sich im Kolben (24) selektiv in Abhängigkeit von einer axialen Eingangskraft verlagert, welche entgegen einer durch eine Rückstellfeder (34) auf die Stange (32) ausgeübten Rückstellkraft nach vorne ausgeübt wird,
vom Typ, bei dem das vordere Ende der Steuerstange (32) mindestens einen Tauchkolben (36) aufweist, der im Kolben (24) gleitend angeordnet ist und mit mindestens einem ringförmigen Sitz eines Ventilelements (38) verbunden ist, das einen zweiten Druck (P₂) in der hinteren Kammer (22) aufbauen kann, der größer ist als der erste, in der vorderen Kammer (20) herrschende Druck (P₁), um die Verlagerung der beweglichen Wand (18) zu bewirken,
vom Typ, bei dem der Servomotor (12) einen Taster (40) aufweist, der am vorderen Ende des Tauchkoibens (36) angeordnet ist und eine Bohrung (42) durchquert, die von dem Kolben (24) ausgeht, und der in der Ruheposition der Steuerstange (32) in einer bestimmten Sprungentfernung (d) von der Reaktionsscheibe (28) angeordnet ist und mit der Reaktionsscheibe (28) in Kontakt gelangen kann, wenn die Steuerstange (32) gemäß einer Eingangskraft betätigt wird, deren Stärke größer ist als eine erste bestimmte Stärke, so dass dem Tauchkolben (36) und der Steuerstange (32) die Reaktionskraft des Hauptzylinders (14) übertragen wird, wobei das Verhältnis zwischen der Oberfläche der Reaktionsscheibe (28), die eine hintere Fläche (48) der Schubstange (46) berührt, und der Oberfläche des Tasters (40) ein erstes bestimmtes Unterstützungsverhältnis bestimmt,
und vom Typ, bei dem die hintere Fläche (48) der Schubstange (46) eine bewegliche Dekompressionswand (50) aufweist, die sich verlagern kann, wenn die Steuerstange (32) gemäß einer Eingangskraft betätigt wird, deren Stärke größer ist als eine zweite bestimmte Stärke, welche größer ist als die erste, um ein zusätzliches Volumen zu bilden, in dem sich ein vorderer Teil (52) der Reaktionsscheibe (28) ausdehnen kann, um die Reaktionskraft zu verringern, die mittels der hinteren Fläche (54) der Reaktionsscheibe (28) zum Taster (40) übertragen wird, wobei das Verhältnis zwischen der Oberfläche der Reaktionsscheibe (28), die die hintere Fläche (48) der Schubstange berührt, und der Oberfläche des Tasters (40) ein zweites Unterstützungsverhältnis bestimmt, das größer ist als das erste,
**dadurch gekennzeichnet, dass** die Schubstange (46) folgendes aufweist:
- einen zylindrischen hinteren Abschnitt (58) mit einem ersten bestimmten Durchmesser (D₁) und einer verringerten Länge (L₁), der die hintere Fläche (48) aufweist, in der ein Langloch (60) ausgebildet ist, das einen konformen Dekompressionskolben (62) aufnimmt, welcher einen zweiten Durchmesser (D₂), der kleiner ist als der erste Durchmesser, und eine Länge (L₂) besitzt, die geringer ist als die Länge (L) des Langlochs (60), und bei dem eine hintere Fläche die bewegliche Dekompressionswand (50) bildet,
- einen zylindrischen vorderen Abschnitt (64) mit einem dritten Durchmesser (D₃), der kleiner ist als der zweite Durchmesser (D₂), und mit einer angepassten Länge (L₃), an dem eine spiralförmige Feder (66) aufgenommen ist, die sich zwischen einer vorderen Absatzfläche (68) des vorderen Abschnitts (64) und mindestens einem eine Durchbohrung (72) des hinteren Abschnitts (58) durchquerenden Arm (70) des Dekompressionskolbens (62) abstützt, um das Zurückstellen des Dekompressionskolbens (62) zu ermöglichen,
um eine Schubstange (46) vorzuschlagen, die einen vorderen Abschnitt (64) mit minimalem Durchmesser (D₃) aufweist, der im hinteren Ende (56) des Primärkolbens (44) des Hauptzylinders (14) aufgenommen sein kann, und die einen Dekompressionskolben (62) mit vergrößertem Durchmesser (D₂) aufweist.

2. Servobremse (10) nach dem vorhergehenden Anspruch, **dadurch gekennzeichnet, dass** der hintere Abschnitt (58) der Schubstange (46) eine Anschlagscheibe (74) aufweist, die am hinteren Ende des vorderen Abschnitts (64) befestigt ist und um die ein röhrenförmiger Halter (76) gefalzt ist, der von einer Bohrung (60) mit dem zweiten Durchmesser (D₂) durchquert ist, die das Langloch bildet, bei dem das hintere Ende den Dekompressionskolben (62) aufnimmt und einen ringförmigen hinteren Rand (78) bildet und das vordere Ende (80) gegenüber von mindestens einer Durchbohrung (72) mündet, die gemäß einem vierten Durchmesser (D₄), der größer ist als der dritte Durchmesser (D₃), exzentrisch ist und durch die mindestens ein exzentrischer Arm (70) des Dekompressionskolbens (62), der sich ausgehend von seiner vorderen Fläche (82) parallel zur Axialrichtung erstreckt, so angeordnet ist, dass er die Rückstellfeder (66) berührt.

3. Servobremse (10) nach dem vorhergehenden Anspruch, **dadurch gekennzeichnet, dass** das hintere Ende des vorderen Abschnitts (64) eine kleine Scheibe (84) gleitend aufnimmt, die zwischen der Rückstellfeder (66) und jedem Arm (70) des Dekompressionskolbens (62) angeordnet ist.

4. Servobremse (10) nach Anspruch 2 oder 3, **dadurch gekennzeichnet, dass** der Dekompressionskolben (62) mindestens drei exzentrische Arme (70) aufweist, die die Anschlagscheibe (74) durchqueren und winkelmäßig gleichmäßig um die Achse (A) der Schubstange (46) verteilt sind.

5. Servobremse (10) nach einem der Ansprüche 2 bis 4, **dadurch gekennzeichnet, dass** sich die Durchbohrungen (72) der Anschlagscheibe (74) über den zweiten Durchmesser (D₂) der Bohrung (60) erstrecken und dass das äußere Ende jedes Arms (70) einen Durchmesser besitzt, der kleiner ist als die Durchbohrung (72) der Scheibe (74), die er durchquert, und einen Vorsprung (88) aufweist, der einen axialen Anschlag bilden soll, der mit einer vorderen Fläche (90) des Halters (76) zusammenwirkt, um zu verhindern, dass der Dekompressionskolben (62) aus der Bohrung (60) des Halters (76) austritt.

6. Servobremse (10) nach einem der Ansprüche 1 bis 5, **dadurch gekennzeichnet, dass** die Absatzfläche (68) des vorderen Abschnitts (64) der Schubstange (46) von einer Schraubenmutter (88) getragen ist, die auf einem von dem vorderen Ende des vorderen Abschnitts (64) getragenen Gewinde (90) aufgenommen ist.

7. Servobremse (10) nach dem vorhergehenden Anspruch, **dadurch gekennzeichnet, dass** das Gewinde (90) eine Länge besitzt, die im Wesentlichen einem Viertel der Länge (L₃) des vorderen Abschnitts (64) der Schubstange entspricht, um eine Vielzahl von Einstellungen der Vorspannung der Rückstellfeder (66) vorzuschlagen.

8. Servobremse (10) nach einem der Ansprüche 1 bis 7, **dadurch gekennzeichnet, dass** das vordere Ende des vorderen Abschnitts (64) eine Durchbohrung (92) aufweist, in der ein hinterer Zapfen (94) eines axialen Stifts (96) der Schubstange (46) aufgenommen ist, der das Anliegen der Schubstange (46) an einer hinteren Fläche (98) einer hinteren Bohrung (100) des Primärkolbens (44) des Hauptzylinders (14) ermöglichen soll.

9. Servobremse (10) nach einem der Ansprüche 2 bis 8, **dadurch gekennzeichnet, dass** mindestens die kleine Scheibe (84), der röhrenförmige Halter (76) und der Dekompressionskolben (62) aus einem Kunststoffmaterial hergestellt sind.
